Europäisches Patentamt

European Patent Office

Office européen des brevets

(19)

(11) Numéro de publication: **0 089 879**
**B1**

(12) **FASCICULE DE BREVET EUROPÉEN**

(45) Date de publication du fascicule du brevet:
23.07.86

(51) Int. Cl.⁴: **B 60 R 22/38**

(21) Numéro de dépôt: **83400520.9**

(22) Date de dépôt: **14.03.83**

---

(54) **Enrouleur pour ceinture de sécurite à verrouillage et déverrouillage rapide et bruit de fonctionnement réduit.**

---

(30) Priorité: **18.03.82 FR 8204584**

(43) Date de publication de la demande:
**28.09.83 Bulletin 83/39**

(45) Mention de la délivrance du brevet:
**23.07.86 Bulletin 86/30**

(84) Etats contractants désignés:
**DE GB IT SE**

(56) Documents cité:
**FR-A-2 414 929**
**US-A-3 831 878**

(73) Titulaire: **AUTOLIV AB, P.O. Box 124, S-44700 Vargarda (SE)**

(72) Inventeur: **Gueguen, Daniel, 29 Avenue Molière, F-78360 Montesson (FR)**
Inventeur: **Rothera, Jacques, 32 Avenue de Brétigny, F-91240 Saint Michel sur Orge (FR)**

(74) Mandataire: **Hirsch, Marc- Roger, 34 rue de Bassano, F-75008 Paris (FR)**

---

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne les enrouleurs pour ceintures de sécurité destinées notamment aux véhicules automobiles terrestres, marins, aériens ou spatiaux.

On connaît des enrouleurs à blocage automatique pour ceintures de sécurité comportant un axe sur lequel la sangle de la ceinture est enroulée et qui est sollicité par un ressort de torsion dans le sens de l'enroulement et un dispositif de verrouillage qui, en cas de choc, bloque l'axe en rotation en empêchant le déroulement de la sangle.

Le dispositif de verrouillage comporte généralement un organe solidaire du support de l'enrouleur destiné à coopérer sous la commande d'un détecteur d'accélération avec un organe entraîné par l'axe d'enroulement de la sangle pour assurer le blocage dudit axe en rotation.

Les organes du dispositif de verrouillage comportent respectivement des saillies et des creux, le blocage ayant lieu lorsque les saillies atteignent le fond desdits creux.

Le brevet US-A-3831878 concerne un enrouleur muni d'un dispositif de verrouillage comprenant un élément avec des saillies solidaire du support de l'enrouleur, destiné à coopérer sous la commande d'un détecteur d'accélération avec des creux d'un organe entraîné par l'axe d'enroulement de la sangle pour assurer le blocage de l'axe en rotation et des moyens de butée pour réduire le bruit résultant de l'engagement à fond des saillies dans les creux.

En condition normale d'utilisation de la ceinture, par exemple lorsqu'un passager se pend vers la boîte à gants du véhicule, le blocage de la sangle a lieu lorsque par exemple le véhicule décélère, et de même, dans le cas d'autres enrouleurs connus, pour tout geste brusque de l'utilisateur; dès lors, du fait de l'engagement à fond des saillies dans les creux du dispositif de verrouillage, la libération de la sangle nécessite un redressement du buste de l'utilisateur d'une amplitude non négligeable.

L'utilisateur est donc interrompu dans son geste pendant une durée dont l'importance constitue une gêne.

L'invention vise à remédier à l'inconvénient du système de verrouillage des enrouleurs connus en créant un enrouleur dont la possibilité de blocage de la sangle en condition normale d'utilisation soit pratiquement exclue sans nuire pour autant à l'efficacité du verrouillage en cas de choc.

Elle a donc pour objet un enrouleur à blocage automatique pour ceinture de sécurité comportant un mandrin monté à rotation dans un support et sur lequel est enroulée la sangle de la ceinture, ledit mandrin étant sollicité par un ressort de torsion dans le sens de l'enroulement et un dispositif de verrouillage destiné à assurer le blocage en rotation du mandrin et à empêcher le déroulement de la sangle, ce dispositif de verrouillage comprenant un premier organe solidaire du support de l'enrouleur et destiné à coopérer en utilisation normale de l'enrouleur sous la commande d'un détecteur d'accélération avec un second organe entraîné par le mandrin pour assurer le blocage dudit axe en rotation, l'un desdits premier et second organes comprenant des saillies destinées à être engagées dans des creux prévus dans l'autre organe, des moyens de butée étant prévus sur l'un desdits premier et second organes pour empêcher en utilisation normale de l'enrouleur, l'engagement à fond desdites saillies dans lesdits creux, caractérisé en ce que le dispositif de verrouillage se bloque lors d'une traction brusque exercée sur la sangle et en ce que lesdits moyens de butée sont destructibles en cas de choc pour permettre ledit engagement à fond.

D'autres caractéristiques de l'invention selon certains modes de réalisation préférés apparaîtront au cours de la description qui va suivre, faite en référence aux dessins annexés, donnés uniquement à titre d'exemple et sur lesquels:

— la figure 1 est une vue partielle en perspective éclatée d'un enrouleur pour ceinture de sécurité; pourvu de moyens de butée destructibles suivant l'invention;

— les Fig. 2, 3 et 4 sont des vues schématiques représentant respectivement les organes du dispositif de verrouillage de l'enrouleur de la Fig. 1 en position de repos, en utilisation normale et en cas de chocs;

— la Fig. 5 est une vue schématique d'une variante de moyens de butée destructibles portés par la came du dispositif de verrouillage;

— la Fig. 6 est une vue partielle en perspective éclatée montrant un autre mode de réalisation des moyens de butée destructibles suivant l'invention associés au dispositif de verrouillage d'un enrouleur;

— la Fig. 7 est une vue partielle de face de la roue à rochet du dipositif de verrouillage de la Fig. 5 avec les moyens de butée destructibles engagés dans chacune des dents de la roue;

— la Fig. 8 est une vue partielle de face de la couronne portant les butées destructibles engagées dans les dents de la roue à rochet de la Fig. 7 ;

— la Fig. 9 est une vue partielle en perspective montrant la form d'une butée destructible destinée à coopérer avec l'une des dents de la roue à rochet de la Fig. 7;

— les Fig. 10, 11, et 12 sont des vues correspondant respectivement à celles des Fig. 7, 8 et 9 montrant un autre mode de réalisation des butées destructibles associées à la roue à rochet du dispositif de verrouillage d'un enrouleur;

— la Fig. 13 est une vue schématique d'un autre type de dispositif de verrouillage pour enrouler de ceinture de sécurité, comportant des moyens de butée destructibles suivant l'invention;

— les Fig. 14, 15 et 16 sont des vues schématiques de dispositifs de verrouillage pour enrouleur d'un autre type pourvus de moyens de butée destructibles suivant l'invention.

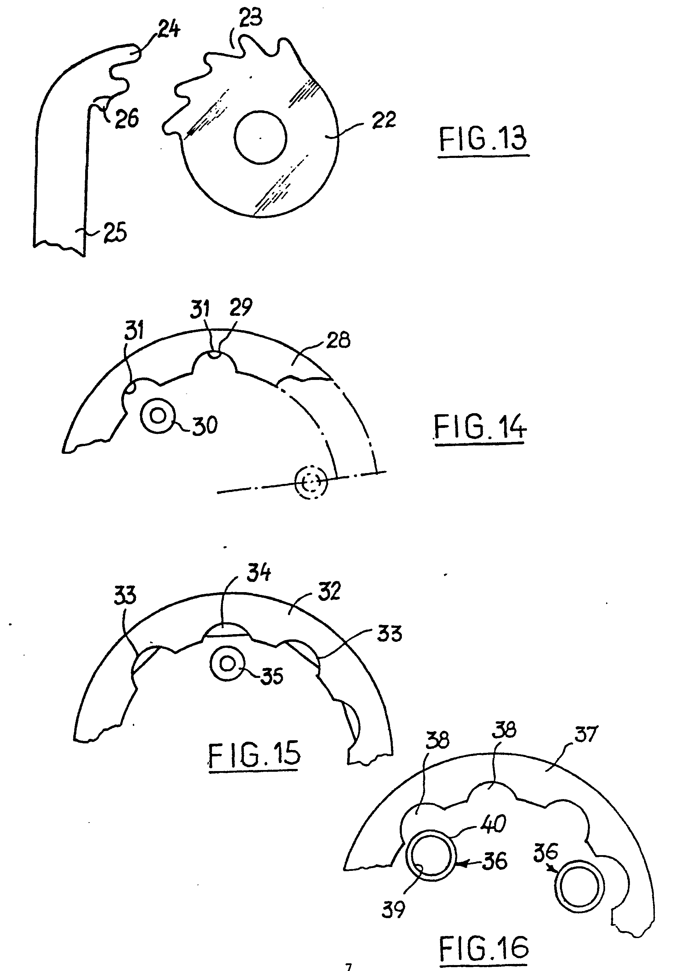

— les Fig. 14, 15 et 16 sont des vues schématiques de dispositifs de verrouillage pour enrouleur d'un autre type pourvus de moyens de butée destructibles suivant l'invention.

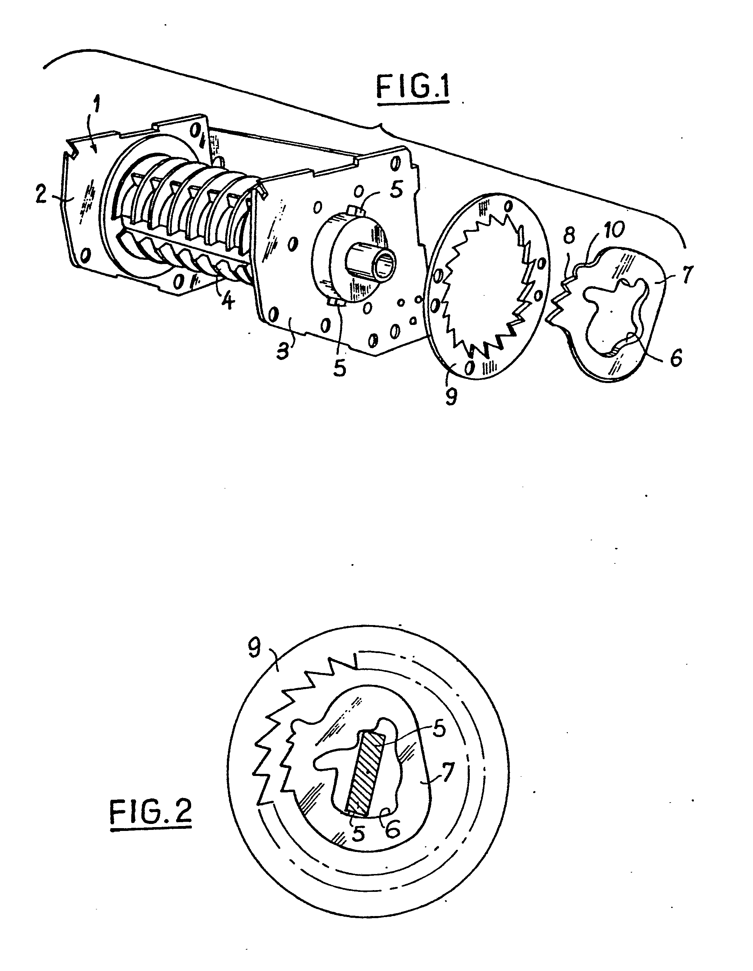

L'enrouleur partiellement représenté à la Fig. 1 comporte un support 1 métallique en forme de chape dans les ailes 2 et 3 duquel est monté à rotation un mandrin 4 sur lequel est destinée à s'enrouler la sangle de l'enrouleur (non représentée). L'extrémité du mandrin 4 qui se trouve en saillie au delà de l'aile 3 du support 1, présente des saillies 5 diamétralement opposées et destinées à coopérer avec un profil fermé de came 6 ménagé dans une pièce 7 formant came, pourvue d'une denture externe 6. La came 7 ainsi constituée est destinée à venir en prise avec une roue à rochet 9 entourant l'extrémité du mandrin 4 en saillie par rapport à l'aile 3 du support 1 et fixée sur cette aile, de manière coaxiale audit mandrin. La came 7 et la roue à rochet 9 constituent en fait le dispositif de verrouillage de l'enrouleur qui, sous l'action d'un détecteur d'accélération non représenté assure le blocage en rotation du mandrin 4 par venue en prise de la denture 8 de la came 7 avec la denture interne de la roue à rochet 9.

La venue en prise des deux organes constituant le dispositif de verrouillage est assurée par l'engagement de la denture externe 8 de la came 7 à fond dans les dents correspondantes de la denture interne de la roue à rochet 9. Il en résulte que lors d'une utilisation normale de l'enrouleur, par exemple, lorsqu'un passager pourvu d'une ceinture de sécurité se penche vers l'avant avec un mouvement relativement brusque, l'engagement total des dentures complémentaires du dispositif de verrouillage nécessite, pour la libération de la ceinture, un mouvement de redressement du buste d'une amplitude relativement importante.

Ceci constitue une gêne non négligeable pour le passager qui doit attendre pour pouvoir continuer son geste interrompu que les dents 8 de la came se soient dégagées de la denture interne de la roue à rochet 9.

Afin de remédier à cet inconvénient, selon un premier mode de réalisation de l'invention, on a prévu d'associer à la denture externe 8 de la came 7 une petite dent peu profonde supplémentaire 10 qui permette lors de l'utilisation normale de l'enrouleur d'éviter l'engagement complet de la denture externe 8 de la came dans la denture interne 9 de la roue à rochet et qui, en cas de choc puisse être détruite par l'effort exercé sur les dentures en regard et qui ne fasse donc pas obstacle à la pénétration complète de la denture externe 8 de la came 7 dans la denture interne de la roue à rochet.

On a représenté sur la Fig. 2, la position relative des saillies 5 diamétralement opposées du mandrin 4, de la came 7 et de la roue à rochet 9 lorsque l'ensemble est en position de repos.

On remarquera que l'invention est considérée comme étant appliquée à un enrouleur dont le mandrin est renforcé par un barreau métallique central du type décrit dans la demande de brevet 81 20 230 déposée le 28 Octobre 1981 par la Demanderesse (correspondant à EP-A-78203), les saillies 5 étant constituées par les extrémités du barreau.

Cependant, l'invention peut également être appliquée à des enrouleurs de types différents.

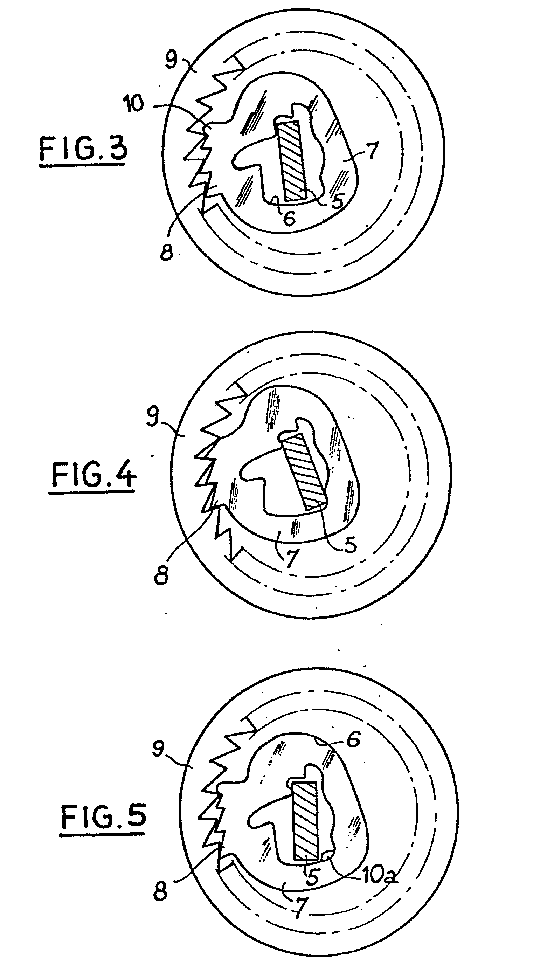

La Fig. 3 montre les mêmes pièces que celles représentées à la Fig. 2, ces pièces occupant des positions relatives correspondant à une utilisation normale de l'enrouleur. On voit sur cette figure que sous l'action des saillies 5 de l'extrémité du mandrin 4, la came 7 a été déplacée vers la denture interne de la roue à rochet 9. La petite dent 10 de la denture externe 8, par sa venue en prise avec l'une des dents de la denture interne de la roue à rochet empêche l'engagement total de la denture externe 8 dans les dents correspondantes de la roue à rochet. Par conséquent, tout en assurant le blocage du mandrin en rotation et l'immobilisation de la sangle, la dent supplémentaire 10 en évitant un engagement total des dentures en présence ce qui, en raison des faibles efforts à supporter lors de l'utilisation normale de l'enrouleur serait inutile, donne à l'ensemble une vitesse de réaction accrue aux mouvements de l'utilisatur. En effet, dès que l'effort exercé sur la sangle de l'enrouleur est supprimée, la dent supplémentaire 10 se dégage pratiquement instantanément de la dent correspondante de la denture de la roue à rochet 9 et libère par conséquent la came 7 par rapport à la roue à rochet. Inversement, lors d'un mouvement brusque de l'utilisateur provoquant l'entraînement de la came 7 par les épaulements 5 du mandrin, la dent supplémentaire 10 de la denture 8 vient rapidement en prise avec la roue à rochet 9 et provoque l'immobilisation de la came 7.

Sur la Fig. 4 on a représenté les mêmes organes que ceux des Fig. 2 et 3, mais dans des positions relatives résultant d'un choc transmis à l'enrouleur par sa sangle.

On voit sur cette Fig. que l'intensité de l'effort exercé par les épaulements 5 du mandrin sur la came 7 a provoqué la destruction de la dent supplémentaire 10 qui a été laminée par l'une des dents de la denture interne de la roue à rochet 9, de sorte que les dents de la denture externe 8 de la came 7 ont été engagées à fond dans la denture de la roue à rochet ce qui a permis d'assurer un verrouillage efficace du mandrin 4 par rapport au support 1 de l'enrouleur.

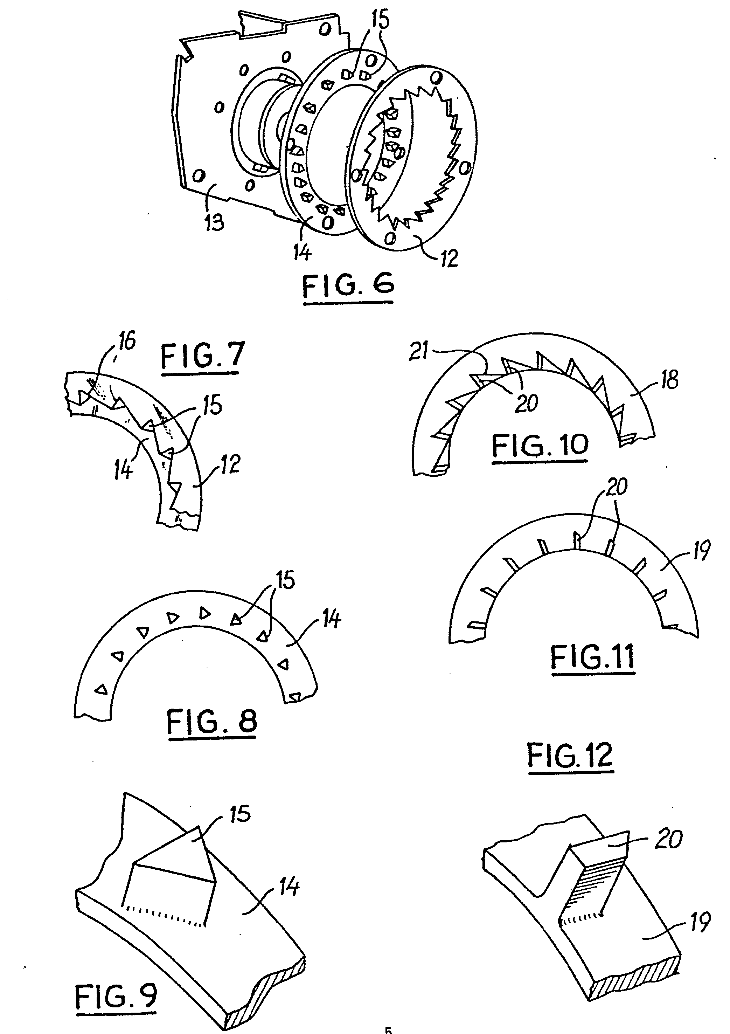

Sur la figure 5, on a représenté la position relative des pièces d'un dispositif de verrouillage pour enrouleur analogue à celui des figures 1 à 4, mais dans lequel les moyens de butée destructibles sont constitués par une dent supplémentaire de la denture externe 8 de la came 7 et par une petite excroissance 10a du profil de came 6, qui se trouve sur le trajet de l'une des sailles 5 du mandrin et qui, en fonctionnement normal, empêche comme représenté sur cette figure, l'engagement de la denture 8 de la came à fond dans la denture interne de la roue à rochet 9.

En cas de choc, cette excroissance 10a est détruite par la saillie 5, ce qui permet le plein engagement de la denture externe 8 de la came dans la denture interne de la roue à rochet.

Sur la figure 6, on a représenté partiellement un enrouleur pour ceinture de sécurité comportant une roue à rochet 12 fixée au support 13 du mandrin, une pièce intercalaire 14 en forme de couronne réalisée par exemple en matière plastique étant intercalée entre le support 13 et la roue à rochet 12. La pièce intercalaire 14 comporte sur sa face en regard de la roue à rochet 12, autant de saillies axiales 15 que la roue à rochet comporte de dents; chacune desdites saillies étant destinée à être engagée contre le bord à forte pente d'une dent 16 correspondante.

Comme le montre la figure 17, chacune des saillies 15 de la couronne 14, engagée contre un bord de forte pente d'une dent 16 de la roue à rochet 12, constitue un élément de butée destructible pour la denture externe d'une came analogue à la came 7 de la figure 1 destinée à coopérer avec la roue à rochet 12.

On voit d'après les Fig. 8 et 9 que chacune des saillies axiales 15 de la couronne 14 en matière plastique est de section triangulaire dont la forme est adaptée à la forme des dents 16 de la roue à rochet. Les saillies 15 provoquent par leur mise en place dans la denture 16 de la roue à rochet une réduction de la profondeur de cette denture, de sorte que lorsque la came du dispositif de verrouillage est sollicitée dans les conditions normales d'utilisation à venir en prise avec la denture de la roue à rochet, sa denture externe vient s'appliquer contre les bords libres des saillies 15 formant butées.

Etant donné que dans les conditions normales d'utilisation, les efforts exercés par la came sur la denture de la roue à rochet ne sont pas importants, les saillies 15 formant butes ne sont pas écrasées, de sorte que les temps de verrrouillage et de déverrouillage du dispositif sont ainsi réduits. De plus, le fonctionnement est silencieux. Au contraire, lorsque l'enrouleur est sollicité dans des conditions de choc, la denture externe de la came exerce sur la denture interne de la roue à rochet des efforts tels qu'ils provoquent l'écrasement des saillies 15 formant butées et l'engagement à fond de la denture de la came dans celle de la roue à rochet.

La Fig. 10 représente en vue partielle une roue à rochet 18 destinée à être fixée sur un support de mandrin d'enroulement pour sangle analogue au support représenté à la Fig. 1. A cette roue à rochet 18 est associée une couronne en matière plastique 19 portant des saillies axiales 20 de section trapézoïdale engagées dans les fonds des dents 21 de la roue à rochet 18.

Aux Fig. 11 et 12, on voit mieux la forme des saillies 20 formant butées.

Le rôle des saillies 20 est analogue à celui des saillies 15 de la couronne 14 représentée à la Fig. 7.

En ce qui concerne le rôle des dents 20, il est le même que celui des dents 15 décrit en référence aux Fig. 7 à 10.

L'agencement représenté à la Fig. 3 diffère des dispositifs précédents par le fait que le dispositif de verrouillage de l'enrouleur est ici constitué par un organe rotatif 22 destiné à être rendu solidaire du mandrin d'enroulement de la sangle de l'enrouleur et comportant une denture externe 23 destinée à coopérer avec la denture d'extrémité 24 d'un levier 25 articulé sur le support fixe de l'enrouleur.

Suivant l'invention, la denture 24 du levier 25 comporte en outre une petite dent supplémentaire 26 qui lors de sa venue en prise avec la denture externe 23 dans les conditions normales d'utilisation de l'enrouleur, empêche l'interpénétration des dents 24 du levier 25 à fond avec la denture externe 23 de la pièce 22.

En revanche, en cas de choc, les efforts exercés entre les dentures sont tels que la dent supplémentaire 26 est détruite, ce qui autorise la venue en prise totale des dents 24 et 23.

L'agencement représenté schématiquement à la Fig. 14 s'applique à un enrouleur qui au lieu d'une roue à rochet du type représenté aux Fig. 1 et 5, comporte une couronne 28 pourvue d'alvéoles 29 disposés à intervalles réguliers. La couronne 28 est, comme la roue à rochet des exemples précédents, fixée au support du mandrin de l'enrouleur. Avec les alvéoles 29 de la couronne 28 coopèrent des galets 30 portés par une pièce de verrouillage pouvant être rendue solidaire en rotation du mandrin par un mécanisme approprié non représenté, l'engagement des galets 30 dans les alvéoles 29 assurant le verrouillage du mandrin portant la sangle de la ceinture par rapport au support de l'enrouleur.

Afin de réduire le temps de verrouillage d'un tel agencement dans les conditions d'utilisation normales chaque alvéole 29 est pourvu d'une saillie écrasable 31 qui réduit le degré de pénétration du galet 30 dans l'alvéole et dont l'écrasement en cas de chocs permet l'engagement complet de chaque galet dans son alvéole correspondant. Les saillies 31 sont par exemple venues de matière avec les fonds des alvéoles 29.

L'agencement représenté à la Fig. 15 comporte comme celui de la Fig. 13, une couronne 32 à alvéoles 33, dont les fonds des alvéoles sont garnis de pastilles 34 de matière écrasable qui jouent le même rôle que les saillies 31 du mode de réalisation de la Fig. 14. Les pastilles 34 peuvent également être portées par une couronne interposée entre la couronne 32 et son support.

Dans le mode réalisation de la Fig. 16, ce sont les galets 36 du dispositif de verrouillage qui comporte par ailleurs une couronne 37 à alvéoles 38, qui sont constitués par une partie pleine métallique 39 entourée d'une partie périphérique 40 en matière écrasable, par exemple en matière plastique. Dans les conditions d'utilisation normales, les galets 36 qui présentent un diamètre accru en raison de leur enrobage 40 en matière écrasable, ne pénètrent que légèrement dans les alvéoles 38, ce qui donne une rapidité de réaction accrue à l'enrouleur. En revanche, en cas de choc, il y a écrasement de la matière périphérique 40 des galets 36 qui pénètrent alors dans les alvéoles jusqu'à ce que leur partie pleine 39 entre en contact avec le fond de ceux-ci. Ainsi, en cas de choc, on obtient un bon verrouillage du mandrin solidaire de la pièce qui porte les galets 36 avec le support de l'enrouleur dont est solidaire la couronne à alvéoles 37.

On voit d'après la description qui précède que l'invention peut être appliquée à des enrouleurs pour ceinture de sécurité des types les plus divers. Les butées destructibles, outre qu'elles permettent de conférer aux enrouleurs qui en sont équipés des temps de réponse réduits aussi bien lors du verrouillage que du déverrouillage dans les conditions normales d'utilisation, rendent le fonctionnement des enrouleurs beaucoup plus silencieux, car notamment dans leur mode de réalisation représentes aux Fig. 6, 7, 10, 15 et 16, elles font appel, dans les conditions normales d'utilisation à un contact entre métal et matière plastique.

**Revendications**

1. — Enrouleur à blocage automatique pour ceinture de sécurité comportant un mandrin (4) monté à rotation dans un support (1) et sur lequel est enroulée la sangle de la ceinture, ledit mandrin étant sollicité par un ressort de torsion dans le sens de l'enroulement et un dispositif de verrouillage destiné à assurer le blocage en rotation du mandrin (4) et à empêcher le déroulement de la sangle, ce dispositif de verrouillage comprenant un premier organe (9; 12; 18; 25; 28; 32; 37) solidaire du support de l'enrouleur et destiné à coopérer en utilisation normale de l'enrouleur sous la commande d'un détecteur d'accélération avec un second organe (7; 22) entraîné par le mandrin (4) pour assurer le blocage dudit axe en rotation, l'un desdits premier et second organes comprenant des saillies destinées à être engagées dans des creux prévus dans l'autre organe ( 9; 12; 18; 25; 28; 32; 37), des moyens de butée (10; 15; 20; 26; 31; 34; 40) étant prévus sur l'un desdits premier et second organes pour empêcher en utilisation normale de l'enrouleur, l'engagement à fond desdites saillies dans lesdits creux, caractérisé en ce que le dispositif de verrouillage se bloque lors d'une traction brusque exercée sur la sangle, et en ce que lesdits moyens de butée sont destructibles en cas de choc pour permettre ledit engagement à fond.

2. — Enrouleur suivant la revendication 1, dans lequel ledit premier organe est constitué par une roue à rochet (9) fixée audit support (1) tandis que le second organe est constitué par une came (7) à denture externe (8) destinée à venir en prise avec la denture interne de la roue à rochet (9), caractérisé en ce que lesdits moyens de butée destructibles sont constitués par une petite dent supplémentaire (10) prévue sur la denture externe (8) de la came (7) et destinée dans les conditions d'utilisation normales de l'enrouleur à empêcher l'engagement de la denture externe (8) de ladite came à fond dans la denture interne de ladite roue à rochet, ladite dent supplémentaire (10) étant détruite en cas de choc par l'effort exercé entre lesdites dentures.

3. Enrouleur suivant la revendication 1, dans lequel ledit premier organe est constitué par une roue à rochet (9) fixée audit support (1) tandis que le second organe est constitué par une came (7) à denture externe (8) destinée à venir en prise avec la denture interne de la roue à rochet (9), ladite came (7) ayant un profil (6) au moyen duquel elle peut être entraînée par ledit mandrin (4), caractérisé en ce que lesdits moyens de butée destructibles sont constitués par une excroissance (10a) du profil de came (6), destinée dans les conditions d'utilisation normales de l'enrouleur, à empêcher l'engagement de la denture externe (8) de ladite came à fond dans la denture interne de ladite roue à rochet, ladite excroissance (10a) étant détruite en cas de choc par l'effort exercé sur elle par l'extémité (5) du mandrin (4).

4. Enrouleur suivant la revendication 1, dans lequel ledit premier organe est constitué par une roue à rochet (12; 18) fixée audit support tandis que le second organe est constitué par une came à denture externe destinée à venir en prise avec la denture interne de la roue à rochet (12; 18) caractérisé en ce que lesdits moyens de butée destructibles sont constitués par des éléments en matière écrasable (15; 20) de réduction de la profondeur de la denture interne de la roue à rochet (12; 18) montés dans les dents (16; 21) de ladite roue à rochet.

5. Enrouleur suivant la revendication 4, caractérisé en ce que lesdits éléments en matière écrasable (15; 20) sont constitués par des saillies axiales venues de matière avec une couronne en matière plastique (14; 19) interposée entre la roue à rochet (12; 18) et son support (13).

6. Enrouleur suivant l'une des revendications 4 et 5, caractérisé en ce que lesdites saillies (15) sont de section triangulaire et sont appliquées dans le fond de chaque dent (16) de la denture interne de la roue à rochet (12).

7. Enrouleur suivant l'une des revendications 4 et 5, caractérisé en ce que lesdites saillies (20) sont de section trapézoïdale et sont appliquées contre un bord de chaque dent (21) de la denture interne de la roue à rochet (18).

8. Enrouleur suivant la revendication 1, dans lequel ledit premier organe du dispositif de verrouillage est constitué par un levier (25) monté oscillant sur le support de l'enrouleur et portant une denture d'extrémité (24) tandis que le second organe est constitué par un organe rotatif (22) comportant une denture externe (23), caractérisé en ce que lesdits moyens de butée destructibles sont constitués par une petite dent supplémentaire (26) prévue sur ledit levier (25) et destinée, en condition d'utilisation normale à empêcher la venue en prise totale de la denture (24) dudit levier avec la denture (23) de l'organe rotatif (22), ladite dent supplémentaire étant détruite en cas de choc par l'effort exercé entre lesdites dentures.

9. Enrouleur suivant la revendication 1, dans lequel ledit premier organe du dispositif de verrouillage est constitué par une couronne (28; 32; 37) pourvue d'alvéoles (29; 33; 38) tandis que le second organe comporte des galets (35; 36) destinés à être engagés dans lesdits alvéoles, caractérisé en ce que lesdits moyens de butée destructibles sont constitués par des éléments écrasables (31; 34; 40) interposés entre lesdits galets et le fond des alvéoles.

10. Enrouleur suivant la revendication 9, caractérisé en ce que les éléments écrasables sont constitués par des saillies (31) prévues dans le fond de chaque alvéoles (29) venues de matière avec la couronne (28) ou par des pastilles (34) en matière plastique garnissant le fond de chaque alvéole (33).

11. Enrouleur suivant la revendication 9, caractérisé en ce que lesdits éléments écrasables sont constitués par des enrobages (40) en matière plastique desdits galets (36).

**Patentansprüche**

1. Selbstsperrender Aufroller für einen Sicherheitsgurt, mit einem Spulenkörper (4), der in einer Stütze (1) drehbar angebracht ist und auf welchen das Gurtband des Gurtes aufgewickelt wird, wobei der Spulenkörper (4) von einer Torsionsfeder in Aufrollrichtung beaufschlagt ist, und einer Verriegelungsvorrichtung zum Blockieren des Spulenkörpers (4) gegen Drehung und zum Verhindern des Abwickelns des Gurtbandes, wobei die Verriegelungsvorrichtung ein mit der Stütze des Aufrollers festes erstes Bauteil (9, 12, 18, 25, 28, 32, 37) enthält, welches im Normalbetrieb des Aufrollers, gesteuert von einem Beschleunigungsfühler, mit einem von dem Spulenkörper (4) angetriebenen zweiten Bauteil (7, 22) zur Blockierung der Drehachse zusammenwirkt und eines der beiden Bauteile Vorsprünge zum Eingreifen in Aussparungen des anderen Bauteils (9, 12, 18, 25, 28, 32, 37) aufweist und an einem der beiden Bauteile Anschlagmittel (10, 15, 20, 26, 31, 34, 40) ausgebildet sind, von welchen im Normalbetrieb des Aufrollers das vollständige Eingreifen der Vorsprünge in die Aussparungen verhindert werden, dadurch gekennzeichnet, daß die Verriegelungsvorrichtung sich bei einem heftigen Ziehen am Gurtband blockiert und daß die Anschlagmittel im Falle eines Aufpralls zum Zulassen des vollständigen Eingreifens zerstörbar sind.

2. Aufroller nach Anspruch 1, bei welchem das erste Bauteil von einem Sperrad (9) gebildet wird, welches an der Stütze (1) festgelegt ist, und das zweite Bauteil von einem Nocken (7) mit Außenverzhnung (8) zum Eingreifen in die innenverzahnung des Sperrades (9) gebildet wird, dadurch gekennzeichnet, daß die zerstörbaren Anschlgmittel von einem an der Außenverzahnung (8) des Nockens (7) vorgesehenen zusätzlichen kleinen Zahn (10) gebildet werden, von welchem beim Normalbetrieb des Aufrollers das vollständige Eingreifen der Außenverzahnung (8) des Nockerns in die innenverzahnung des Sperrades verhindert wird und welcher im Falle eines Aufpralls unter der zwischen den Verzahnungen wirkenden Kraft zerstört wird.

3. Aufroller nach Anspruch 1, bei welchem das erste Bauteil von einem Sperrad (9) gebildet wird, welches an der Stütze (1) festgelegt ist, und das zweite Bauteil von einem Nocken (7) mit Außenverzhnung (8) zum Eingreifen in die Innenverzahnung des Sperrades (9) gebildet wird, wobei der Nocken (7) eine Profilierung (6) aufweist, an welcher er von dem Spulenkörper (4) mitnehmbar ist, dadurch gekennzeichnet, daß die zerstörbaren Anschlagmittel von einer Ausstülpung (10a) der Profilierung des Nockens (6) gebildet werden und von der Ausstülpung in Normalbetrieb des Aufrollers das vollständige Eingreifen der Außenverazhnung (8) des Nockens in die Innenverzahnung des Sperrades verhindert wird, wobei die Ausstülpung (10a) im Falle eines Aufpralls unter der von dem Ende (5) des Spulenkörpers (4) auf sie ausgeübten Kraft zerstört wird.

4. Aufroller nach Ansruch 1, bei welchem das erste Bauteil von einem Sperrad (12, 16) gebildet wird, welches an der Stütze festgelegt ist, und das zweite Bauteil von einem Nocken mit Außenverzahnung zum Eingreifen in die Innenverzahnung des Sperrades (12, 18) gebildet wird, dadurch gekennzeichnet, daß die zerstörbaren Anschlagmittel von die Tiefe der Innenverzahnung des Sperrades (12, 18) verringernden, zwischen den Zähnen (16, 21) des Sperrades angeordneten Elementen (15, 20) aus zerquetschbarem Material gebildet werden.

5. Aufroller nach Anspruch 4, dadurch gekennzeichnet, daß die Elemente (15, 20) aus zerquetschbarem Material von axialen Vorsprüngen gebildet werden, die an einer Ringscheibe (14, 19) aus Kunststoffmaterial ausgebildet sind, welche zwichen dem Sperrad (12, 18) und dessen Stütze (13) angeordnet ist.

6. Aufroller nach Anspruch 4 oder 5, dadurch gekennzeichnet, daß die Vorsprünge (15) im Querschnitt dreieckig sind und am Grund jeder Zahnlücke (16) der Innenverzahnung des Sperrades (12) angeordnet sind.

7. Aufroller nach Anspruch 4 oder 5, dadurch gekennzeichnet, daß die Vorspünge (20) einen trapezförmigen Querschnitt haben und an einer Flanke jedes Zahnes (21) der Innenverzahnung des Sperrades (18) anliegen.

8. Aufroller nach Anspruch 1, bei welchem das erste Bauteil der Verriegelungsvorrichtung von einem Hebel (25) gebildet wird, der hin- und herschwenkbar an der Stütze des Aufrollers befestigt ist und eine Endverzhnung (24) aufweist, und das zweite Bauteil von einem Rotationsteil (22) gebildet wird, welches mit einer Außenverzahnung (23) versehen ist, dadurch gekennzeichnet, daß die zerstörbaren Anschlagmittel von einem an dem Hebel (25) ausgebildeten kleinen zusätzlichen Zahn (26) gebildet werden, von welchem im Normalbetrieb das vollständige Eingreifen der Verzahnung (24) des Hebels in die Verzahnung (23) des Rotationsteils (22) verhindert wird und welcher im Falle eines Aufpralls unter der zwischen den Verzahnungen wirkenden Kraft zerstört wird.

9. Aufroller nach Anspruch 1, bei welchem das erste Bauteil der Verriegelungsvorrichtung von einer Ringscheibe (28, 32, 37) mit Ausnehmungen (29, 33, 38) gebildet wird und das zweite Bauteil Rollen (35, 36) zum Eingreifen in die Ausnehmungen enthält, dadurch gekennzeichnet, daß die zerstörbaren Anschlagmittel von zerquetschbaren Elementen (31, 34, 40) gebildet werden, die zwischen den Rollen und dem Grund der Ausnehmungen angeordnet sind.

10. Aufroller nach Anspruch 9, dadurch gekennzeichnet, daß die zerquetschbaren Elemente von am Grund jeder Ausnehmung (29) angeordneten Vorsprüngen (31), die aus mit der Ringscheibe (28) in Verbindung stehendem Material sind, oder von Plättchen (34) aus Kunststoffmaterial gebildet werden, von denen der Grund jeder Ausnehmung (33) ausgefüttert wird.

11. Aufroller nach Anspruch 9, dadurch gekennzeichnet, daß die zerquetschbaren Elemente von aus Kunststoffmaterial bestehenden Ummantelungen (40) der Rollen (36) gebildet werden.

**Claims**

1. — Automatic locking safety belt retractor comprising a mandrel (4) mounted in rotation within a support (1) and upon which is wound the webbing of the belt, the said mandrel being urged by a torsion spring in the winding direction and a locking device intended to ensure the blocking in rotation of the mandrel (4) and to prevent the unwinding of the webbing, this locking device comprising a first member (9, 12, 18, 25, 28, 32, 37) fastened to the retractor support and intended to cooperate through normal utilization of the retractor under control of an acceleration detector with a second member (7, 22) moved by the mandrel (4) in order to ensure the blocking of the said axis in rotation, one of the said first and second members comprising projecting pieces intended to be engaged in the recesses provided in the other element (9, 12, 18, 25, 28, 32, 37), abutment means (10, 15, 20, 26, 31, 34, 40) being provided upon one of the said first and second members in order to provide during normal utilization of the retractor, the thorough engagement of the said projecting pieces within the said recesses, characterized in that the locking device is blocked upon a sudden pull or jerk exerted upon the webbing and in that the said abutment means are destructible in the case of shock in order to allow the thorough engagement.

2. — Retractor according to claim 1, in which the said first member is constituted by a ratchet-wheel (9) fastened to the said support (1) while the second member is constituted by a shaft (7) having external teeth (8) intended to be engaged with the internal toothing of the ratchet-wheel (9), characterized in that the said destructible abutment means are constituted by a small supplementary tooth (10) provided in the external toothing (8) of the shaft (7) and intended under conditions of normal utilization of the retractor to prevent the engagement of the external tooth (8) of the said shaft thoroughly within the internal toothing of the said rachet-wheel, the said supplementary tooth (10) being destroyed in the case of shock through the effort exerted between the said toothings.

3. — Retractor according to claim 1, in which the first member is constituted by a rachet-wheel (9) fastened to the said support (1) while the second member is constituted by a shaft (7) having external teeth (8) intended to engage with the internal toothing of the ratchet-wheel (9), the said shaft (7) having an outline (6) by means of which it can be engaged by the said mandrel (4), characterized in that the said destructible abutment means are constituted by a protuberance (10a) of the outline of the shaft (5), intended under conditions of normal utilization of the retractor, to prevent the engagement of the external toothing (8) of the said shaft thoroughly in the external toothing of the said ratchet-wheel, the said protuberance (10a) being destroyed in the case of shock by the effort exerted thereupon by the end (R) of the mandrel (4).

4. — Retractor according to claim 1, in which the first member is constituted by a ratchet-wheel (12, 18) fastened to the said support whereas the second member is constituted by a shaft with external toothing intended to engage with the internal toothing of the ratchet-wheel (12, 18) characterized in that the said destructible abutment means are constituted by elements made of crushable material (15, 20) reducing the depth of the internal gearing of the ratchet-wheel (12, 18) mounted in the teeth (16, 21) of the said ratchet-wheel.

5. — Retractor according to claim 4, characterized in that the said elements made of crushable material (15, 20) are constituted by axial projecting pieces of the same material with a crown made of plastic material (14, 19) interposed between the ratchet-wheel (12, 16) and its support (13).

6. — Retractor according to one of claims 4 and 5, characterized in that the said projecting pieces (15) have triangular sections and are applied with in the bottom of each tooth (16) of the internal toothing of the ratchet-wheel (12).

7. — Retractor according to one of claims 4 and 5, characterized in that the said projecting pieces (20) have trapezoidal sections and are applied against an edge of each tooth (21) of the internal toothing of the ratchet-wheel (18).

8. — Retractor according to claim 1, in which the first member of the locking device is constituted by a lever (25) mounted oscillating upon the support of the retractor and bearing an end toothing (24) while the second member is constituted by a rotary member (22) comprising an external toothing (23), characterized in that the said destructible abutment means are constituted by a small supplementary tooth (26) provided upon the said lever (25) and intended, under conditions of normal utilization to prevent the total engagement of the gearing (24) of the said lever with the toothing (23) of the rotary member (22), the said supplementary tooth being destroyed in the case of shock under the effort exerted between the toothings.

9. — Retractor according to claim 1, in which the said first member of the locking device is constituted by a crown (28, 32, 37) provided with alveole (29, 33, 38) while the second member comprises roller rings (35, 36) intended to be engaged in the said alveoles, characterized in that the said destructible abutment means are constituted by cruchable elements (31, 34, 40) interposed between the said roller rings and the bottom of the alveoles.

10. — Retractor according to claim 9, characterized in that the crushable elements are constituted by projecting pieces (31) provided in the bottom of each alveole (29) made of the same material with the crown (28) or by pellets (34) made of plastic material packing the bottom of each aloveole (33).

11. — Retractor according to claim 9, characterized in that the said crushable elements are constituted by coatings (40) made of plastic material of the said roller rings (36).

# FIG.1

# FIG.2

FIG.3

FIG.4

FIG.5

0 089 879

FIG. 6

FIG.7

FIG. 8

FIG.9

FIG. 10

FIG.11

FIG.12

FIG.13

FIG.14

FIG.15

FIG.16

7